# EUROPEAN PATENT SPECIFICATION

(11) **EP 0 923 459 B1**
(45) Date of publication and mention of the grant of the patent: **29.05.2002**
(21) Application number: 97937926.0
(22) Date of filing: 28.08.1997
(51) Int. Cl.: B60K 25/00, F02B 67/06

(54) **BUS WITH AIRCONDITIONING**
BUS MIT KLIMAANLAGE
AUTOCAR OU AUTOBUS A AIR CONDITIONNE

(30) Priority: 30.08.1996 SE 9603162
(43) Date of publication of application: 23.06.1999
(73) Proprietor: Scania CV Aktiebolag (publ), 151 87 Södertälje (SE)
(72) Inventor: BERGMAN, Ulf, S-641 47 Katrineholm (SE)
(74) Representative: Waldebäck, Hans Olov
(86) International application number: SE9701432
(87) International publication number: WO9808701

(56) References cited:
- EP-A- 0 713 960
- EP-B- 0 653 553
- WO-A-96/09464
- US-A- 5 063 897
- US-A- 5 503 117
- US-A- 5 531 648

## Description

The present invention relates to a bus in accordance with the preamble to the main claim.

### State of the art

A known practice in passenger vehicles and trucks is that a compressor unit forming part of an airconditioning system for their interior is driven by their engines. This compressor unit has consisted of a so-called AC compressor and has been arranged on a bracket fastened to the end of the engine which incorporates the transmission which forms part of the engine. The AC compressor has been driven directly from the engine crankshaft by a belt, usually a V-belt. This sort of arrangement is shown in EP 713960.

Another way to arrange the compressor and generator is shown in EP 0653553, from which are known the features of the preamble of both independent claims 1 and 2 and which shows a combustion engine whose cylinders are set in a plane which is angled relative to a vertical plane. The engine has a power takeout shaft that drives auxiliaries, such as alternator and AC-compressor, via a belt. The compressor is mounted on the engine in such a position that its centre of gravity relative to the engine crankshaft centre is within an angular range about *90°* from a vertical plane through said crankshaft centre.

It has not been possible to apply this solution to engines for driving large heavy buses with large passenger accommodation, since the compressor unit in such buses would have to be of considerable size and weight to be able to deliver the power needed for such an airconditioning system. There is no room for a large AC compressor or a number of small compressors within reasonable distance from the engine crankshaft, and hence no possibility of connecting a bracket supporting the compressor unit reasonably securely to the engine block. This has particularly been the case where the engine, as is usual in buses of this kind, also supports and drives by belts from the crankshaft one or more electricity generators of considerable size which are necessary for the relatively large electricity consumption exhibited by such a bus with airconditioning system. The compressor unit has therefore been placed on the bus frame as close to the engine as possible, to enable the unit to be belt-driven. This still results, however, in a relatively long belt drive with belt tension problems due to various movements between the engine and the chassis, while at the same time the installation of the belt drive arrangement and the compressor unit has to take place as a separate operation after the complete fitting of the engine and other drive units in the bus.

The invention has the object of making it possible to fit the engine which powers the vehicle, preferably a so-called heavy bus, with one relatively large or a number of small AC compressors without the latter being too far from the engine crankshaft or requiring unreasonably robust supporting brackets. A further aim of the invention is to make possible a compact engine unit, including arrangements for driving both electricity generators and AC compressors, in order to facilitate the subsequent mounting of a vehicle body on a chassis equipped with the engine unit.

### Brief description of the invention

These objects are achieved according to the invention by what is indicated in the characterising part of the main claims.

Using a conventional engine whose cylinders are placed in line in a plane which is set at a relatively large angle makes it possible to free space in order to be able to fasten both the compressor unit and the generator unit to the upward facing side of the engine. If this is done within an angular range delineated from the engine cylinder plane relative to the crankshaft centre, the result is relatively short lever arms for fastening the brackets of these units to the engine. It also makes it possible to gain space for arranging the drives of one or more electricity generators in the space between the compressor unit and the tilted engine block.

The engine is angled at between 40° and 60° to a vertical plane through the crankshaft centre. Also, the angle at the crankshaft centre between the cylinder plane and the centre of gravity of the compressor unit, which is situated on the opposite side of said vertical plane, is between 60° and 120°. This makes possible a compact engine unit incorporating an AC compressor drive which is suited to, and easy to install in, a space-optimised bus chassis.

The electricity generator unit is situated within an angular range which at the crankshaft centre extends from the engine cylinder plane to the plane through the engine crankshaft and which includes the centre of gravity of the compressor unit. The result is a compact engine unit incorporating the belt drives not only for one or more AC compressors but also for one or more electricity generators in such a way that the belt drives are within a limited but well-utilised area on the endwall of the engine. It also makes it relatively easy to use parts of the auxiliary unit arrangement which is already applied to engines suited to other vehicle applications such as truck operation.

The effects aimed at by the invention are of course also achieved in a largely similar manner if the positions of the compressor unit and the electricity generator unit are reversed.

Other features distinguishing the invention are indicated in the attached patent claims and the description below of an embodiment of the invention.

### List of drawings

An advantageous embodiment of the invention is described below with reference to the attached drawings, which are as follows:
Figure 1 depicts schematically a bus according to the invention,
Figure 2 shows a view from above of the rear section of the bus depicted in Figure 1 and
Figure 3 shows a schematic end view of a drive engine forming part of a bus according to Figures 1 and 2.

### Description of an embodiment

Expressions used in this description with regard to directions such as in front, forward, front, rear, behind, rearward, right and left are all referred to the direction of forward movement of the bus unless otherwise indicated.

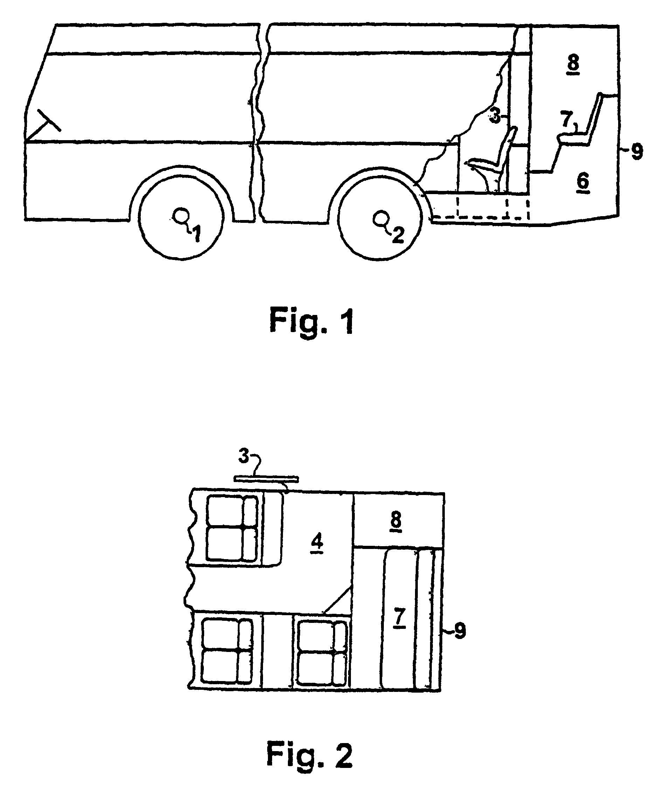

A two-axled bus depicted in Figure 1 is a so-called heavy bus intended for relatively large numbers of passengers. The right side of the bus exhibits passenger doors forward of the front axle 1 and, in an urban bus version also between the front axle 1 and the rear axle 2. Rearward of the rear axle 2 the bus is also provided with a passenger door 3 leading to a standing area 4 which is indicated in the cutaway rear section of the bus in Figure 1 and in Figure 2.

The bus's drive unit, including its auxiliary units, is situated in a space 6 under a passenger bench seat 7 (arranged in the extreme rear of the bus) and in a tower-like space 8 beside the bench seat 7 in the rear right corner of the bus. The space 6 extends across substantially the whole width of the bus and is limited rearwards by the rear wall 9 of the bus and forwards and upwards by substantially vertical walls and horizontal planes which are connected to the bench seat 7. The space 6 also has a connection with the rear axle 2 via a space situated along the left side of the bus. The drive unit's engine and gearbox with a bevel gear are accommodated in the space 6, while the engine's radiator device is arranged in the tower space 8 above the righthand end of the engine. The drive unit is consequently installed with the engine crankshaft transverse to the forward direction of the bus.

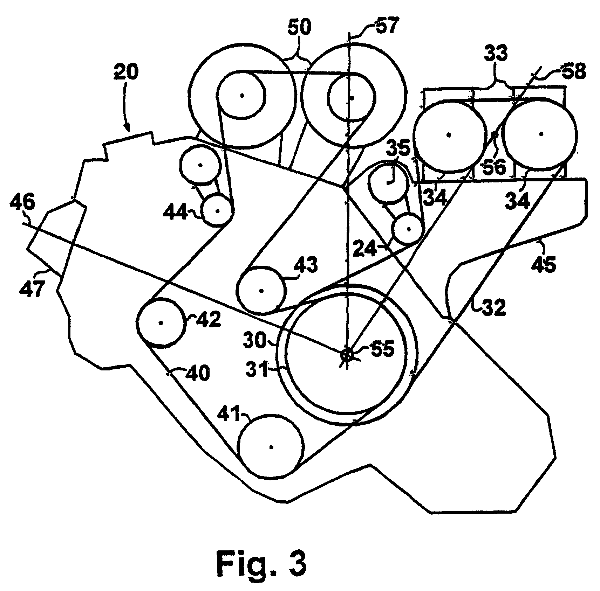

The engine 20, the righthand end of which is depicted in Figure 3, is a so-called in-line engine, i.e. it has a number of cylinders (not depicted) placed in a row. The engine 20 is installed in the space 6 at a large angle, between 40° and 60°, to a vertical plane 57 through its crankshaft centre 55 so that its cylinders have their extent along a plane 46. The forward upward facing side of the engine incorporates parts belonging to the inlet system, while the rear downward facing side incorporates parts of the engine exhaust system, particularly its exhaust manifold. The upper part of the cylinders is close to the bus's rear wall 9. In a conventional but here undepicted manner, the cylinders are covered by a cylinder head with inlet and outlet ports, valve mechanisms and injection parts. This is covered outside by one or more valve covers 47 which in this case is the engine component which extends furthest rearwards.

The engine's righthand end depicted in Figure 3 is situated directly inside the right side of the bus and includes on the end of the engine crankshaft a vibration damper 30 and, furthest out, a separate belt pulley 31. A drive belt 32, advantageously of the poly-V type, cooperates with a belt drive section (not depicted) on the periphery of the vibration damper. The belt drive 32 runs round more than 180° of the periphery of the vibration damper and transmits driving power to a compressor unit 33 (consisting in this embodiment of two compressors) forming part of an airconditioning system intended for the bus's passenger space. The compressors 33 each have a belt pulley 34 cooperating with the belt 32.

Other parts belonging to the airconditioning system are advantageously arranged in or on the roof of the bus as close to the compressor unit as possible, but as that system does not form part of the present invention no further description of it is given here.

Adjacent to the endwall of the engine, an intermediate pulley 24 is mounted on a spindle in order to move along a circular arc. This intermediate pulley 24 is spring-loaded against the belt 32 in order to keep the latter taut and create a sufficient winding angle for the belt 32 for its cooperation with the vibration damper 30 and the belt pulleys 34 of the compressors 33. The intermediate pulley 24 also makes it possible to fit the belt 32.

A second driving belt 40, likewise advantageously of the poly-V type, cooperates with the belt pulley 31 to drive at least one electrical generator unit 50 (consisting in this embodiment of two generators) fastened to the engine. The belt 40 also drives, via a belt pulley 41, a coolant pump arranged on the engine and also runs over fixed intermediate pulleys 42, 43 and a spring-loaded swingingly mounted intermediate pulley 44 of the same type and with the same function as the intermediate pulley 24.

The compressors 33 are arranged horizontally side by side and fastened to a bracket 45 which is itself fastened to the rearward and upward facing side of the engine. In this embodiment the bracket 45 is also arranged to support adjacent to the engine endwall the bearing of the spring-loaded intermediate pulley 24. To keep the forces on the bracket and its fastening within reasonable limits it is advantageous if the compressors' common centre of gravity 56 is within an angular range of 0 to 60° to the vertical plane 57 through the engine crankshaft centre 55. Space is also created for installing other auxiliary units connected to the engine if the angle at the engine crankshaft centre between the cylinder plane and the compressor's centre of gravity is between at least 60° and 120°.

It is also advantageous to arrange the electricity generators 50 (belt-driven from the crankshaft) within an angular range between the engine cylinder plane 46 and the plane which includes the centre of gravity of the compressors 33 as seen from the crankshaft centre 55. This makes possible a compact drive unit which can already during bus chassis manufacture be equipped with airconditioning compressors and electricity generators and their drives. This facilitates the bus's final completion by the body being mounted on the chassis.

Also, the resiliently mounted intermediate pulley 24 cooperating with the compressor drive belt 32 is situated outside the two areas limited by the compressor drive belt 32 and the generator drive belt 40. Said intermediate pulley 24 is also mounted, however, as seen in the end plane of the engine, within an angular range between the engine cylinder plane 46 and the plane 58 which includes the compressors' centre of gravity 56 as seen from the crankshaft centre 55. This results in effective utilisation of the space available adjacent to the endwall of the engine for arranging the intermediate pulleys and belt pulleys which cooperate with the belts 32, 40.

The effects aimed at by the invention are of course also achieved in a largely similar manner if the positions of the compressor unit 33 and the electricity generator unit 50 are reversed.

## Claims

1. Bus, preferably a heavy bus,
a) with a system for airconditioning of a passenger space and
b) with a combustion engine (20) which has an upward facing side and whose cylinders are set in line in a cylinder plane (46) which is substantially angled relative to a vertical plane,
c) with a compressor unit (33) forming part of said airconditioning system, and
d) with an electricity generator unit (50),
e) which units (33, 50) are driven from an engine crankshaft via belts 55(32,34) and are fastened to said the engine,
f) said compressor unit (33) mounted on said engine via a bracket (45) in such a position that its centre of gravity (56) relative to a centre (55) of said engine crankshaft is within an angular range from a vertical plane (57) through said crankshaft centre (55), which angular range relative to the engine cylinder plane is situated on the opposite side of said vertical plane (57)
g) said cylinder plane (46) of the engine is angled between 40 and 60° to the vertical plane through the crankshaft centre (55),
h) said electricity generator unit (50) being situated within an angular range extending from said cylinder plane (46) to a plane (58) defined by the centre of gravity of said compressor unit and said crankshaft,
**characterised in that**
i) said compressor unit and said electricity generator unit (33, 50) are fastened to said upward facing side of the engine,
k) Said angular range relative to said vertical plane through the crankshaft centre at which said compressor unit (33) is mounted on said engine is within a range of 0 to 60°,
l) said cylinder plane (46) of the engine is angled between 60 and 120° to said plane (58) defined by the centre of gravity of the compressor unit and the crankshaft.

2. Bus, preferably a heavy bus,
a) with a system for airconditronrng of a passenger space and
b) with a combustion engine (20) which has an upward facing bide and whose cylinders are set in line in a cylinder plane (46) which is substantially angled a relative to a vertical plane,
c) with a compressor unit (33) forming part of said airconditioning system, and
d) with an electricity generator unit (50),
e) which units (33, 50) are driven from an engine crankshaft via belts 55(32,34) and are fastened to said the engine,
f) said electricity generator unit (50) mounted on said engine via a bracket (45) in such position that its centre of gravity (56) relative to a centre (55) of said engine crankshaft is within an angular range from a vertical plane (57) through said crankshaft centre (55), which angular range relative to the engine cylinder plane is situated on the opposite side of said vertical plane (57)
g) said cylinder plane (46) of the engine is angled between 40 and 60° to the vertical plane through the crankshaft centre (55),
h) said compressor unit (33) being situated within an angular range extending from said cylinder plane (46) to a plane (58) defined by the centre of gravity of said electricity generator unit (50) and said crankshaft,
**characterised in that**
i) said compressor unit and said electricity generator unit (33, 50) are fastened to said upward facing side of the engine,
k) said angular range relative to said vertical plane through the crankshaft centre at which said electricity generator unit (50) is mounted on said engine is of within a range of 0 to 60°,
l) said cylinder plane (46) of the engine is angled between 60 and 120° to said plane (58) defined by the centre of gravity of the electricity generator unit (50) and the crankshaft.

3. Bus according to patent claim 1 or 2, ***characterised* in that** the compressor unit (33) incorporates two compressors both driven by the same drive belt (32) from the crankshaft.

4. Bus according to either of patent claims 1, 2 and 3, ***characterised* in that** the generator unit (50) incorporates two electricity generators both driven from the crankshaft by the same drive belt (40) separately from the belt (32) which drives the compressors (33).

5. Bus according to patent claim 3, ***characterised* in that** the compressor drive belt (32) is a poly-V belt which cooperates with an intermediate pulley (24) which is resiliently mounted on the engine endwall within an angular range relative to the crankshaft centre (55) between the engine cylinder plane (46) and the plane (58) which includes the compressors' centre of gravity (56).

6. Bus according to patent claim 5, ***characterised* in that** the support of the intermediate pulley (24) is in a perpendicular plane relative to the crankshaft, situated outside the area which is limited by both the compressor drive belt (32) and the drive belt (40) for the electricity generators (50).

7. Bus according to any one of the foregoing patent claims, ***characterised* in that** the engine crankshaft end supports a vibration damper (30) whose outer casing forms a belt pulley for one of the drive belts (32,40) which drive the compressor or the electricity generator units (33,50).

## Patentansprüche

1. Bus, vorzugsweise ein schwerer Bus,
a) mit einem System zum Klimatisieren eines Fahrgastraums und
b) mit einem Verbrennungsmotor (20), der eine nach oben gewandte Seite hat und dessen Zylinder in Reihe in einer Zylinderebene (46) angeordnet sind, die in Bezug auf eine vertikale Ebene in einem erheblichen Winkel angeordnet ist,
c) mit einer einen Teil des Klimatisierungssystems bildenden Kompressoreinheit (33), und
d) mit einer Elektrizitätsgeneratoreinheit (50),
e) welche Einheiten (33, 50) über Riemen 55 (32, 34) von einer Motorkurbelwelle angetrieben werden und am Motor befestigt sind,
f) wobei die Kompressoreinheit (33) über einen Träger (45) auf dem Motor an einer solchen Stelle montiert ist, daß ihr Schwerpunkt (56) in Bezug auf eine Mitte (55) der Motorkurbelwelle innerhalb eines Winkelbereichs von einer vertikalen Ebene (57) durch die Kurbelwellenmitte (55) liegt, welcher Winkelbereich in Bezug auf die Motorzylinderebene auf der gegenüberliegenden Seite der vertikalen Ebene (57) liegt,
g) die Zylinderebene (46) des Motors in einem Winkel zwischen 40 und 60° zur vertikalen Ebene durch die Kurbelwellenmitte (55) angeordnet ist,
h) wobei die Elektrizitätsgeneratoreinheit (50) innerhalb eines Winkelbereichs liegt, der sich von der Zylinderebene (46) zu einer durch den Schwerpunkt der Kompressoreinheit und die Kurbelwelle definierten Ebene (58) erstreckt,
**dadurch gekennzeichnet, daß**
i) die Kompressoreinheit und die Elektrizitätsgeneratoreinheit (33, 50) an der nach oben gewandten Seite des Motors befestigt sind,
k) der Winkelbereich in Bezug auf die vertikale Ebene durch die Kurbelwellenmitte, in dem die Kompressoreinheit (33) am Motor montiert ist, in einem Bereich von 0 bis 60° liegt,
l) die Zylinderebene (46) des Motors in einem Winkel zwischen 60 und 120° zur durch den Schwerpunkt der Kompressoreinheit und die Kurbelwelle definierten Ebene (58) angeordnet ist.

2. Bus, vorzugsweise ein schwerer Bus,
a) mit einem System zum Klimatisieren eines Fahrgastraums und
b) mit einem Verbrennungsmotor (20), der eine nach oben gewandte Seite hat und dessen Zylinder in Reihe in einer Zylinderebene (46) angeordnet sind, die in Bezug auf eine vertikale Ebene in einem erheblichen Winkel angeordnet ist,
c) mit einer einen Teil des Klimatisierungssystems bildenden Kompressoreinheit (33), und
d) mit einer Elektrizitätsgeneratoreinheit (50),
e) welche Einheiten (33, 50) über Riemen 55 (32, 34) von einer Motorkurbelwelle angetrieben werden und am Motor befestigt sind,
f) wobei die Elektrizitätsgeneratoreinheit (50) über einen Träger (45) auf dem Motor an einer solchen Stelle montiert ist, daß ihr Schwerpunkt (56) in Bezug auf eine Mitte (55) der Motorkurbelwelle innerhalb eines Winkelbereichs von einer vertikalen Ebene (57) durch die Kurbelwellenmitte (55) liegt, welcher Winkelbereich in Bezug auf die Motorzylinderebene auf der gegenüberliegenden Seite der vertikalen Ebene (57) liegt,
g) die Zylinderebene (46) des Motors in einem Winkel zwischen 40 und 60° zur vertikalen Ebene durch die Kurbelwellenmitte (55) angeordnet ist,
h) wobei die Kompressoreinheit (33) innerhalb eines Winkelbereichs liegt, der sich von der Zylinderebene (46) zu einer durch den Schwerpunkt der Elektrizitätsgeneratoreinheit (50) und die Kurbelwelle definierten Ebene (58) erstreckt,
**dadurch gekennzeichnet, daß**
i) die Kompressoreinheit und die Elektrizitätsgeneratoreinheit (33, 50) an der nach oben gewandten Seite des Motors befestigt sind,
k) der Winkelbereich in Bezug auf die vertikale Ebene durch die Kurbelwellenmitte, in dem die Elektrizitätsgeneratoreinheit (50) am Motor montiert ist, in einem Bereich von 0 bis 60° liegt,
l) die Zylinderebene (46) des Motors in einem Winkel zwischen 60 und 120° zur durch den Schwerpunkt der Elektrizitätsgeneratoreinheit (50) und die Kurbelwelle definierten Ebene (58) angeordnet ist.

3. Bus nach Patentanspruch 1 oder 2, **dadurch *gekennzeichnet*, daß** die Kompressoreinheit (33) zwei Kompressoren enthält, die beide durch den gleichen Antriebsriemen (32) von der Kurbelwelle angetrieben werden.

4. Bus nach einem der Patentansprüche 1, 2 und 3, **dadurch *gekennzeichnet*, daß** die Generatoreinheit (50) zwei Elektrizitätsgeneratoren enthält, die beide getrennt vom Riemen (32), der die Kompressoren (33) antreibt, durch den gleichen Antriebsriemen (40) von der Kurbelwelle angetrieben werden.

5. Bus nach Patentanspruch 3, **dadurch *gekennzeichnet*, daß** der Kompressorantriebsriemen (32) ein Keilrippenriemen ist, der mit einer Zwischenscheibe (24) zusammenarbeitet, die innerhalb eines Winkelbereichs in Bezug auf die Kurbelwellenmitte (55) zwischen der Motorzylinderebene (46) und der Ebene (58), die den Schwerpunkt (56) der Kompressoren enthält, an der Endwand des Motors federnd montiert ist.

6. Bus nach Patentanspruch 5, **dadurch gekennzeichnet, daß** der Träger der Zwischenscheibe (24) in einer senkrechten Ebene in Bezug auf die Kurbelwelle außerhalb des Bereichs angeordnet ist, der durch sowohl den Kompressorantriebsriemen (32) als auch den Antriebsriemen (40) für die Elektrizitätsgeneratoren (50) begrenzt ist.

7. Bus nach einem der vorhergehenden Patentansprüche, **dadurch gekennzeichnet, daß** das Ende der Motorkurbelwelle einen Schwingungsdämpfer (30) trägt, dessen äußeres Gehäuse eine Riemenscheibe für einen der Antriebsriemen (32, 40) bildet, welche die Kompressor- oder die Elektrizitätsgeneratoreinheit (33, 50) antreiben.

## Revendications

1. Bus, de préférence autocar,
a) ayant un système de conditionnement d'air du compartiment passager et
b) ayant un moteur à combustion (20) qui a un côté dirigé vers le haut et dont les cylindres sont établis en ligne dans un plan de cylindres (46) qui est sensiblement incliné par rapport à un plan vertical,
c) ayant une unité de compresseur (33) formant une partie dudit système de conditionnement d'air, et
d) ayant une unité génératrice d'électricité (50),
e) lesquelles unités (33, 50) sont entraînées à partir d'un vilebrequin de moteur via des courroies (32,34) et sont fixées sur ledit moteur,
f) ladite unité de compresseur (33) étant montée sur ledit moteur via une cornière (45) dans une position telle que son centre de gravité (56) par rapport à un axe (55) dudit vilebrequin de moteur est dans une plage angulaire à partir d'un plan vertical (57) passant par l'axe de vilebrequin (55), laquelle plage angulaire par rapport au plan de cylindres du moteur est située sur le côté opposé dudit plan vertical (57)
g) ledit plan de cylindres (46) du moteur est incliné entre 40 et 60° par rapport au plan vertical passant par l'axe de vilebrequin (55),
h) ladite unité génératrice d'électricité (50) étant située dans une plage angulaire s'étendant à partir dudit plan de cylindres (46) vers un plan (58) défini par le centre de gravité de ladite unité de compresseur et ledit vilebrequin,
**caractérisé en ce que** :
i) ladite unité de compresseur et ladite unité génératrice d'électricité (33, 50) sont fixées sur ledit côté du moteur dirigé vers le haut,
k) ladite plage angulaire par rapport audit plan vertical passant par l'axe de vilebrequin au niveau duquel ladite unité de compresseur (33) est montée sur ledit moteur est dans une plage de 0 à 60°,
l) ledit plan de cylindres (46) du moteur est incliné entre 60 et 120° par rapport audit plan (58) défini par le centre de gravité de l'unité de compresseur et le vilebrequin.

2. Bus de préférence autocar,
a) ayant un système de conditionnement d'air du compartiment passager et
b) ayant un moteur à combustion (20) qui a un côté dirigé vers le haut et dont les cylindres sont établis en ligne dans un plan de cylindres (46) qui est sensiblement incliné par rapport à un plan vertical,
c) ayant une unité de compresseur (33) formant une partie dudit système de conditionnement d'air, et
d) ayant une unité génératrice d'électricité (50),
e) lesquelles unités (33, 50) sont entraînées à partir d'un vilebrequin de moteur via des courroies (32,34) et sont fixées sur ledit moteur,
f) ladite unité génératrice d'électricité (50) étant montée sur ledit moteur via une cornière (45) dans une position telle que son centre de gravité (56) par rapport à un axe (55) dudit vilebrequin de moteur est dans une plage angulaire à partir d'un plan vertical (57) passant par l'axe de vilebrequin (55), laquelle plage angulaire par rapport au plan de cylindre du moteur est située sur le côté opposé dudit plan vertical (57),
g) ledit plan de cylindres (46) du moteur est incliné entre 40 et 60° par rapport au plan vertical passant par l'axe de vilebrequin (55),
h) ladite unité de compresseur (33) étant située dans une plage angulaire s'étendant à partir dudit plan de cylindres (46) vers un plan (58) défini par le centre de gravité de ladite unité génératrice d'électricité (50) et ledit vilebrequin,
**caractérisé en ce que** :
i) ladite unité de compresseur et ladite unité génératrice d'électricité (33, 50) sont fixées sur ledit côté du moteur dirigé vers le haut,
k) ladite plage angulaire par rapport audit plan vertical passant par l'axe de vilebrequin au niveau duquel ladite unité génératrice d'électricité (33) est montée sur ledit moteur est dans une plage de 0 à 60°,
l) ledit plan de cylindres (46) du moteur est incliné entre 60 et 120° par rapport audit plan (58) défini par le centre de gravité de l'unité génératrice d'électricité (50) et le vilebrequin.

3. Bus selon la revendication 1 ou 2, **caractérisé en ce que** l'unité de compresseur (33) comporte deux compresseurs tous deux entraînés par la même courroie d'entraînement (33) à partir du vilebrequin.

4. Bus selon l'une quelconque des revendications 1 à 3, **caractérisé en ce que** l'unité génératrice (50) comporte deux générateurs d'électricité tous deux entraînés à partir du vilebrequin par la même courroie d'entraînement (40), séparément de la courroie (32) qui entraîne les compresseurs (33).

5. Bus selon la revendication 3, **caractérisé en ce que** la courroie d'entraînement de compresseur (32) est une courroie crantée en V qui coopère avec une poulie intermédiaire (24) qui est montée de manière élastique sur la paroi d'extrémité du moteur dans une plage angulaire par rapport à l'axe de vilebrequin (55) située entre le plan de cylindres du moteur (46) et le plan (58) qui comporte le centre de gravité des compresseurs (56).

6. Bus selon la revendication 5, **caractérisé en ce que** le support de la poulie intermédiaire (24) est dans un plan perpendiculaire par rapport au vilebrequin, situé à l'extérieur de la zone qui est limitée par à la fois la courroie d'entraînement de compresseur (32) et la courroie d'entraînement (40) des générateurs d'électricité (50).

7. Bus selon l'une quelconque des revendications précédentes, **caractérisé en ce que** l'extrémité de vilebrequin du moteur supporte un amortisseur de vibrations (30) dont le boîtier extérieur forme une poulie de courroie pour l'une des courroies d'entraînement (32, 40) qui entraînent le compresseur ou les unités génératrices d'électricité (33, 50).
